# EUROPEAN PATENT APPLICATION

(11) **EP 4 586 138 A1**
(43) Date of publication of application: **16.07.2025**
(21) Application number: 24151585.7
(22) Date of filing: 12.01.2024
(51) Int. Cl.: G06N 3/04, G06N 3/0495, G06N 3/082

(54) **SYSTEM AND METHOD FOR PROVIDING A TASK- AND HARDWARE-ARCHITECTURE-SPECIFIC MACHINE LEARNING MODEL**

(71) Applicant: Robert Bosch GmbH, 70442 Stuttgart (DE)
(72) Inventor: Staffler, Benedikt Sebastian, 72072 Tuebingen (DE); Reiss, Attila, 71277 Rutesheim (DE); Rapp, Martin, 73728 Esslingen Am Neckar (DE); Elsken, Thomas, 49757 Vrees (DE); Dey, Souvik, 70182 Stuttgart (DE)

(57) **Abstract**

A system and method 300 are provided for providing a task- and hardware-architecture-specific machine learning model. A trained superposition model may be provided 320, which may comprise a superposition of a set of machine learning models, individual ones of the set of machine learning models being extractable from the trained superposition model. A characterization of a target hardware architecture may be received. The trained superposition model may be finetuned 330 for an application task in a hardware-architecture-agnostic way. A machine learning model may be selected from the finetuned superposition model, wherein the selecting may comprise performing, for the target hardware architecture, a search 340 using a first function describing a first performance of a candidate machine learning model for the application task and a second function describing a second performance of the candidate machine learning model when executed on the target hardware architecture. The selected machine learning model may be provided as output for deployment on the target hardware architecture.

## Description

### Field of the invention

The presently disclosed subject matter relates to a system and method for providing a task-specific and hardware-architecture-specific machine learning model. The presently disclosed subject matter further relates to a transitory or non-transitory computer-readable medium comprising data representing instructions, which when executed by a processor system, cause the processor system to perform one or more steps of the method.

### Background of the invention

Foundation models (FM) are a type of machine learning (ML) models which are comparatively large in size, and are trained on a large amount of data, generally by self-supervised learning or semi-supervised learning, such that the model may be adapted to be applied to a broad range of application tasks, or downstream tasks. In that sense, foundation models are quite universal. This type of models has helped in the major transformation of how systems in artificial intelligence (Al) are built and how new types of technology have been able to evolve, such as language models, e.g., the Bidirectional Encoder Representations from Transformers (BERT) model from Google, the foundation models in Generative Pre-trained Transformers (GPT) models, e.g., the GPT-*n* models from OpenAl, chatbot technology such as Chat-GPT and other user-interacting AI systems.

However, foundation models, being large in size, are not hardware-efficient. They suffer from large numbers of parameters, and very significant computational and memory costs, rendering them difficult for deployment in a real-world setting.

Past attempts have been made as a way to overcome this problem. To this end, several knowledge-transfer methods have been introduced, with which knowledge may be transferred from a larger teacher network to a smaller, student network. This way, knowledge may be transferred from a foundation model to a smaller model which may have a smaller number of parameters, and less computational and memory costs.

For example, in the paper 'NAS-BERT: Task-Agnostic and Adaptive-Size BERT Compression with Neural Architecture Search' by Xu et al., which may be retrieved from https://arxiv.org/abs/2105.14444. a task-agnostic knowledge-transfer method using techniques in neural architecture search (NAS) is executed for the BERT model from Google in order to perform model compression, yielding NAS-BERT. The employed compression algorithm is downstream task agnostic, so that the compressed models are generally applicable for different downstream tasks. NAS-BERT then trains a big supernet on a designed search space containing a variety of architectures. During training, NAS-BERT progressively discards architectures based on their training loss, size, and latency on the target hardware. Finally, NAS-BERT outputs multiple models with different sizes and latency, in order to support different memory and latency limitations on the target device. Furthermore, the training of NAS-BERT is conducted on standard self-supervised pre-training tasks and does not depend on specific downstream tasks. This way, the compressed models can be used across various downstream tasks.

A disadvantage of NAS-BERT is that the steps have to be re-run for each new target hardware architecture, which incurs significant computational costs.

### Summary of the Invention

It would be desirable to be able to provide task- and hardware-architecture-specific machine learning models in a more computationally efficient manner.

In accordance with a first aspect of the invention, as defined by claim 1, a method is provided for providing a task-specific and hardware-architecture-specific machine learning model. In accordance with a further aspect of the invention, a system is provided as defined by claim 14. In accordance with a further aspect of the invention, a computer-readable medium is provided as defined by claim 15.

The above measures may involve providing a trained superposition model. Such superposition models, sometimes called one-shot models, comprise a superposition of many models into one, as expanded upon in, e.g., `Once-for-All: Train One Network and Specialize It for Efficient Deployment' by Cai et al., which paper can be retrieved from https://arxiv.org/pdf/1908.09791. The trained superposition model may have been pre-trained using a general dataset and thus in a task-agnostic manner. In some examples, the trained superposition models may have been used as student network in a knowledge-transfer method to transfer knowledge from a foundation model to the superposition model. The superposition model may also have been trained from scratch, for example if enough data and computational resources are available. The foundation model and/or the superposition model may comprise neural networks.

The above measures may further involve receiving a characterization of a target hardware architecture. This characterization of a target hardware architecture may describe aspects of the hardware architecture which may be distinctive or otherwise characteristic of the target hardware architecture in terms of computational efficiency: e.g., a number of floating point operations (FLOPs) which can be performed in a time unit, a number of multiply-accumulate (MAC) operations, a latency for executing a certain neural network, etc.

The above measures may further involve finetuning the trained superposition model for an application task in a hardware-architecture-agnostic way. Whereas the superposition model may have been trained using a general dataset, here, the finetuning may comprise using a labelled dataset which is specific for the application task. For example, the labelled dataset may comprise a subset of the general dataset, or it may comprise the whole of the general dataset. The labelled dataset may for example comprise sensor signals as data, such as image data, radar data and LiDAR data. The application task may for example comprise a classification task, such as image perception, and/or a regression task. The finetuning may for example be carried out using a sandwich rule and/or in-place distillation. The finetuning may be hardware-architecture-agnostic in that the characterization of the target hardware architecture may not be used in the finetuning, e.g., to steer or otherwise control the finetuning.

The above measures may further involve selecting a machine learning model from the finetuned superposition model. The selecting of the machine learning model may comprise performing, for the target hardware architecture, a search using a first function describing a first performance of a candidate machine learning model for the application task and a second function describing a second performance of the candidate machine learning model when executed on the target hardware architecture. The search may also be referred to as a 'model architecture search' as the different candidate machine learning models may represent different model architectures. These measures may be further explained as follows.

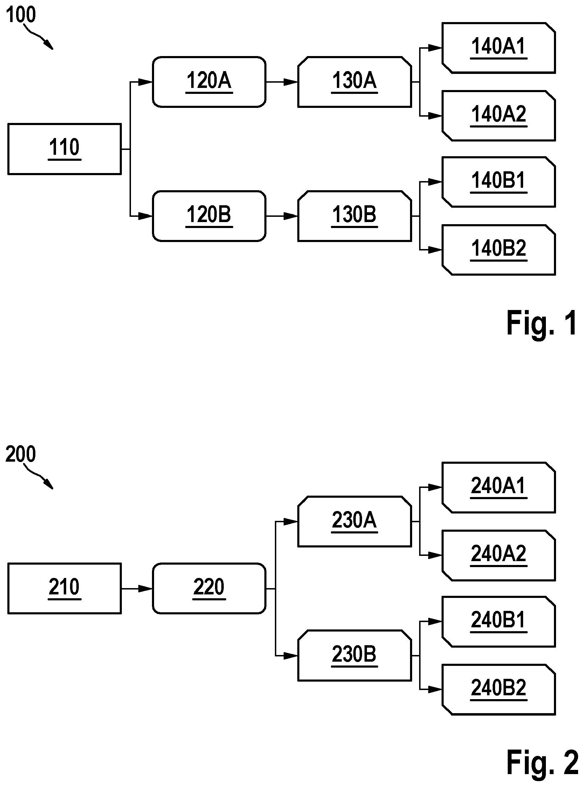

The superposition model may be configured to provide alternative operations for data tensors. Individual machine learning models may be extractable from the trained superposition model by selecting one or a subset of operations from the alternative operations for each of the data tensors. For example, a neural network may comprise sequences of operations on data tensors such as convolutions, max poolings and/or activation functions. In the superposition model, instead of one, several alternative operations may be applied to a same data tensor. The several alternative operations may together form a supernet, as in a supernetwork. Such supernets per se are known from the literature: see for an example Fig. 1b in 'DARTS: Differentiable Architecture Search' by Liu et al., which paper may be retrieved from https://arxiv.org/pdf/1806.09055.pdf. The superposition model may then allow a machine learning model to be extracted by selecting one or a subset of operations from each set of alternative operations, and in some cases none of the operations. See for an example the aforementioned paper by Liu et al., wherein the model architecture shown in Fig. 1d forms a subset of the supernet shown in Fig. 1b. In general, the individual machine learning models which are extractable from the superposition model may have different model architectures, for example by differing in the number of network layers or other model components, in their relative arrangement (e.g., parallel, serial), the way components are configured, arranged and/or connected in the topology of the architecture (e.g., geometrically, and/or logically in the information flow between the different components), the types of network layers or other model components, etc. It may be desirable to select a machine learning model which not only performs well on the application task at hand, but also on the target hardware architecture. For that purpose, the selecting of a machine learning model from the finetuned superposition model may involve a search, in which the performance of candidate machine learning models may be evaluated based on a (first) function which describes how a candidate machine learning model would perform for the application task and a (second) function which describes the hardware performance of a candidate machine learning model when it would be executed on the target hardware architecture. The first function may characterize this performance based on distinctive or otherwise characteristic properties, such as classification accuracies, mean average precisions, perplexities, and approximations thereof. The second function may characterize the hardware performance based on distinctive or otherwise characteristic properties, such as values corresponding to different hardware types, measurements, such as latencies, on a sample hardware, energy consumptions, memory characterizations, and/or an approximation of any of the characterizing values and/or parameters. The search may then be configured to search for a trade-off between the first function and the second function, for example a Pareto-optimal trade-off yielding a Pareto-optimal model architecture.

The above measures may further involve providing the selected machine learning model as output for deployment on the target hardware architecture. Since the machine learning model may have been selected from the superposition model after having been finetuned for the application task and using a search which may be based both on the application performance as well as on the computational performance on the target hardware architecture, the resulting selected machine learning model may be considered a task-specific and hardware-architecture-specific machine learning model.

The above measures may be based on the insight that when seeking to deploy foundational models, or similar models which may have been trained on generic training data in practical applications, the application task is typically a given, e.g., pedestrian detection, while hardware architectures may vary, e.g., over time due to technical improvements in compute architectures, or at a given time due to there existing different deployment targets (e.g., different products), etc. In other words, while hardware architectures may frequently vary, a given application task will less likely change, e.g., over time. In view of this, the inventors have considered to perform the finetuning, which is typically still relatively computationally intensive, in a task-specific yet hardware-architecture-agnostic manner. As such, the finetuned superposition model is not yet fixed to a specific target hardware architecture, but only finetuned to the application task at hand. By being a superposition model, there exist different machine learning models which are extractable from the finetuned superposition model, which different machine learning models are each finetuned for the application task. Adaptation to the target hardware architecture may then be achieved by selecting from the different machine learning models, taking both the application performance and the computational performance on the target hardware architecture into account. When a new hardware target architecture is considered, for example due to the aforementioned improvement in compute architectures or different deployment targets, only the search may need to be performed again, which is typically less computationally complex than the finetuning.

In an embodiment, the search may be initialized based on a result of a past search. Given that the differences between a current and a past search in terms of, for example, hardware architectures, may generally be likely to be comparatively small, a solution from the past search may typically be a likely candidate for a solution for a current search. By using the past search as the initialization of the current search, the search efficiency of the current search may therefore be improved.

In an embodiment, the search comprises using the result of the past search to initialize an evolutionary search procedure. The result of the past search may be used as one or more seed models for the evolutionary search procedure. In general, an evolutionary search, which is time-dependent, may benefit from an initialization based on a past search for an initial time.

In an embodiment, the search comprises using the result of the past search to initialize a distribution optimization over model architectures. The result of the past search may comprise an optimized distribution over model architectures, which may be used as a starting point for a distribution optimization over model architectures in the search. The optimized distribution over model architecture may be used as a starting point in one or more search methods that optimize a distribution over model architectures in a superposition model. The optimized distribution, which is the result from the past search, typically serves as a likely candidate for the distribution over model architectures in the superposition model, given that the differences between the current and the past distribution optimization may generally be likely to be comparatively small, which generally improves the search efficiency of the resulting current distribution optimization over model architectures.

In an embodiment, the past search comprises a task-agnostic and hardware-architecture-agnostic search, wherein the past search is applied to the trained superposition model using a task-independent function which estimates a performance of a candidate machine learning model of the trained superposition model and a hardware-architecture-independent function which estimates a computational efficiency of the candidate machine learning model of the trained superposition model. The past search may be task-agnostic, and/or hardware-agnostic, which means no specific application task or target hardware characteristic is used in the search, and the search does not depend on it in any controlling manner. Such a past model architecture may be applicable in a broad sense, e.g., for many application tasks, and therefore may serve as a universally likely candidate for a solution to the current search. This past search may thus be used to initialize all kinds of task-specific and/or hardware-architecture-specific searches. The usage of such a past, task- and hardware-architecture-agnostic search, of which the result is transferred to a task- and hardware-specific search, may speed up the task- and hardware-specific search. To be able to arrive at an optimal or at least reasonable past search result, a task-independent function may be provided to characterize the performance of the candidate model architecture on a non-specific, 'universal', task. The task-independent function may thus be a function which describes how a candidate machine learning model would perform without considering a specific application task. The task-independent function may characterize this performance based on one or more universally applicable metrics relating to the performance of a model, such as a distillation loss used while training the superposition model, and a number of parameters of the candidate machine learning model, e.g., as a proxy for representation capabilities of the candidate machine learning model. In addition to the task-independent function, a hardware-architecture-independent function may be used to characterize the performance of the candidate model architecture on a non-specific, 'universal', hardware architecture. The hardware-architecture-independent function may be a function which describes the computational efficiency of a candidate machine learning model independently of any specific hardware architecture. The hardware-architecture-independent function may characterize the computational efficiency of a candidate machine learning model based on one or more universally applicable metrics relating to the computational efficiency, such as a number of floating point operations (FLOPs), a number of multiply-accumulate (MAC) operations, a number of parameters of the candidate machine learning model, e.g., as a proxy for memory traffic of the candidate machine learning model, and a latency on default hardware. The past search may for example be configured to search for a Pareto-optimal trade-off between the first, task-independent function and the second, hardware-architecture-independent function. This may then yield a Pareto-optimal model architecture.

In an embodiment, the method further comprises using the selected machine learning model to initialize a subsequent search for a further machine learning model for another application task and/or another target hardware architecture. Given that the differences between a subsequent search and the current search may generally be comparatively small, in terms of, for example, hardware architectures, the result from the current model architecture may be used to initialize a subsequent search since it is likely to be a comparatively suitable starting point for the subsequent search. The initialization of the subsequent search based on the current search may thereby improve the search efficiency of the subsequent search. While the application task in the subsequent search may be different from the application task in the current search, the target hardware architecture in the subsequent search may remain the same as or similar to the target hardware architecture in the current search. *Vice versa,* while the target hardware architecture in the subsequent search may be different from the target hardware architecture in the current search, the application task in the subsequent search may remain the same as or similar to the application task in the current search. Moreover, even if both the application task and the target hardware architecture change, the changes may be small enough that the result from the current search may serve as a likely starting point for the subsequent search. This way, searches may be carried out iteratively in a computationally efficient manner.

In an embodiment, the method further comprises training a superposition model to provide the trained superposition model by using the superposition model as a student model and using a foundation model as a teacher model, the training comprising using a knowledge-transfer method to transfer knowledge from the teacher model to the student model. This way, valuable knowledge may be transferred from the foundation model to the smaller superposition model, with less computational and memory cost and with potentially fewer training data than when having to directly train the superposition model on broad training data. The resulting trained superposition model may then be applicable in a broad sense, e.g., for many application tasks. The knowledge-transfer method may comprise the usage of knowledge distillation (KD), such as a task-agnostic knowledge distillation. Knowledge distillation, as discussed in 'Distilling the Knowledge in a Neural Network' by Hinton et al., which can be retrieved from https://arxiv.org/abs/1503.02531, is a means to transfer knowledge from a large teacher network to a hardware-efficient student network, thereby providing computationally and resource-efficient models from large, (pre-)trained models. KD may be employed before finetuning takes place; this enables to re-use the same student network for several application tasks, which renders the student network broadly applicable.

In an embodiment, the knowledge-transfer method further comprises the usage of a neural architecture search (NAS) to automate the design of the architecture of the used neural networks in the knowledge-transfer method, thereby avoiding manual design of these architectures and speeding up the process of the knowledge-transfer method.

In an embodiment, the method further comprises finetuning the trained superposition model for a further application task to provide a further finetuned superposition model and selecting a further machine learning model from the further finetuned superposition model. This way, from the trained, task-agnostic superposition model, multiple, task-specific models may be extracted via finetuning. In other words, the trained, task-agnostic superposition model may then serve as a basis for the multiple, task-specific superposition models, which in turn may each serve as a basis for multiple, hardware-architecture-specific models. If needed, additional task-specific superposition models may then be obtained only in the case in which there are additional application tasks. These multiple instances of finetuning for application tasks may be carried out simultaneously, or consecutively, with respect to the application tasks.

In an embodiment, the method further comprises providing a further task-specific and hardware-architecture-specific machine learning model for a further target hardware architecture by again selecting a machine learning model from the finetuned superposition model. This selecting of a machine learning model from the finetuned superposition model may happen in an analogous manner to what has been explained above, involving a search. In doing so, the further hardware-specific model for the further target hardware architecture may be derived from the finetuned, task-specific superposition model. This way, from the finetuned, task-specific superposition model, which is hardware-architecture-agnostic, multiple, hardware-architecture-specific models may be extracted via the further search and without needing additional finetuning procedures. Optionally, a result from a search for a target hardware architecture may be re-used as an initialization for a further search for a further target hardware architecture. In the case in which the target hardware architecture and the further target hardware architecture relate to a same application task, this result from a model architecture may be a likely candidate as an initialization for the further search. It is noted that the searches for different target hardware architectures may be carried out simultaneously, or consecutively.

In an embodiment, the superposition model is configured to provide alternative operations for data tensors, wherein an individual machine learning model is extractable from the trained superposition model by selecting one or a subset of operations from the alternative operations for each of the data tensors.

In a further aspect of the invention, a system is provided, which comprises one or more processors; and one or more storage devices storing instructions that, when executed by the one or more processors, cause the one or more processors to perform operations for a method according to an embodiment as discussed above.

In a further aspect of the invention, a transitory or non-transitory computer-readable medium is provided, which comprises data representing instructions, which when executed by a processor system, cause the processor system to perform one or more steps of the method according to an embodiment as discussed above.

It will be appreciated by those skilled in the art that two or more of the above-mentioned embodiments, implementations, and/or optional aspects of the invention may be combined in any way deemed useful.

Modifications and variations of any device, system, network, computer-implemented method and/or any computer readable medium, which correspond to the described modifications and variations of another of such entities, can be carried out by a person skilled in the art on the basis of the present description.

### Brief description of the drawings

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,
**Figs. 1** and **2** show examples of methods for training and finetuning a foundation model;
**Fig.3** shows a method for providing a task-specific machine learning model according to an embodiment;
**Figs. 4-6** show methods for providing a task-specific and hardware-architecture-specific machine learning model according to an embodiment;
**Fig. 7a** shows a computer-readable medium having a writable part comprising a computer program according to an embodiment; and
**Fig. 7b** shows a representation of a processor system according to an embodiment.

### Reference signs list

The following list of references and abbreviations is provided for facilitating the interpretation of the drawings and shall not be construed as limiting the claims.
- 100: method for training and finetuning a foundation model
- 110: training of a foundation model
- 120A: performing KD/NAS for target hardware architecture A
- 120B: performing KD/NAS for target hardware architecture B
- 130A, 130B: task-agnostic search
- 140A1,140B1: finetuning on application task 1
- 140A2, 140B2: finetuning on application task 2

- 200: method for training and finetuning a foundation model
- 210: training of a foundation model
- 220: performing KD/NAS for a one-shot model
- 230A: performing task-agnostic search for target hardware-architectu re-A
- 230B: performing task-agnostic search for target hardware-architectu re-B
- 240A1, 240B1: finetuning on application task 1
- 240A2, 240B2: finetuning on application task 2

- 300: method for providing a task- and hardware-architecture-specific machine learning model
- 310: optionally training a foundation model
- 320: providing a trained superposition model
- 330: finetuning the trained superposition model for an application task in a hardware-agnostic way
- 340: search for a hardware architecture

- 400: method for providing a task- and hardware-architecture-specific machine learning model
- 330.1: finetuning the trained superposition model for an application task 1 in a hardware-agnostic way
- 330.2: finetuning the trained superposition model for an application task 2 in a hardware-agnostic way
- 340.1, 340.2: search for a hardware architecture

- 500: method for providing a task- and hardware-architecture-specific machine learning model
- 340A: search for target hardware architecture A
- 340B: search for target hardware architecture B
- 350: past, task- and hardware-architecture-agnostic search

- 600: method for providing a task- and hardware-architecture-specific machine learning model
- 340.1A, 340.2A: search for target hardware architecture A
- 340.1B, 340.2B: search for target hardware architecture B

- 1000: optical storage device
- 1001: memory card
- 1020, 1021: stored data

- 1140: processor system
- 1110: subsystems or components
- 1120: processing subsystem
- 1122: memory
- 1124: dedicated integrated circuit
- 1126: communication interface
- 1130: interconnect

### Detailed description of embodiments

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

**Fig. 1** shows an example of a method 100 for training and finetuning a foundation model, which resembles the structure of NAS-BERT.

First, a foundation model is trained in a step 110. In steps 120A and 120B, KD/NAS is performed for two target hardware architectures, which are identified by characters `A' and `B', respectively. Steps pertaining to a respective target hardware architectures may in the following be identified by the respective character as a suffix. For example, step 120A may comprise performing KD/NAS for the target hardware architecture A. With continued reference to KD/NAS, it is noted that the knowledge distillation part is employed as a means to transfer knowledge from the large teacher network, which is in this example the foundation model, to a one-shot model using a neural architecture search (NAS).

The one-shot model constitutes the student model. As such, in steps 120A and 120B, a task-agnostic yet hardware-specific KD/NAS is performed for each target hardware architecture.

In steps 130A and 130B, a task-agnostic search is performed for each target hardware architecture A and B separately. Note that this task-agnostic search cannot optimize architectures for the application tasks; the model architecture has to be finetuned on the application tasks.

In steps 140A1 -2 and 140B1-2, the obtained model architecture is finetuned on the application tasks. Here, the two present application tasks are identified by numerals '1' and '2'. The aggregation of the aforementioned steps as the method 100 may represent NAS-BERT, which in turn may be viewed as a model-compressed version of BERT with the compression algorithm being task-agnostic.

The method 100 has several downsides. First of all, computationally expensive KD/NAS, which requires hardware metrics such as the latency of candidate model architectures, needs to be run per each target hardware architecture. Next to this, the task-agnostic search cannot optimize architectures for the application tasks.

**Fig. 2** shows an example of a method 200 for training and finetuning a foundation model, which resembles the structure of a method called AutoDistil, which is a known technique. AutoDistil represents another attempt to address the problem of computational inefficiency of foundation models. AutoDistil is discussed in the paper `AutoDistil: Few-shot Task-agnostic Neural Architecture Search for Distilling Large Language Models', by Xu et al., which may be retrieved from https://arxiv.org/pdf/2201.12507, is an example. In this paper, KD/NAS is used to compress large models into smaller student networks, and automatically distil several compressed student networks with varying computational cost from the large model.

In **Fig. 2****,** an overview of a variant of AutoDistil is presented. First, a foundation model is trained in a step 210. In step 220, KD/NAS is performed, which distils a single one-shot model from the foundation model. In steps 230A and 230B, a task-agnostic search is performed for each target hardware architecture A and B separately. In steps 240A1-2 and 240B1-2, the obtained model architecture is finetuned on the application tasks. The two present application tasks are identified by numerals '1' and '2'.

This variant of AutoDistil 200 has several downsides. First of all, it cannot optimize model architectures for application tasks, thereby wasting optimization potential. Next to this, the search has to be started from scratch for each target hardware architecture, which leads to considerably higher computational costs, especially in larger search spaces.

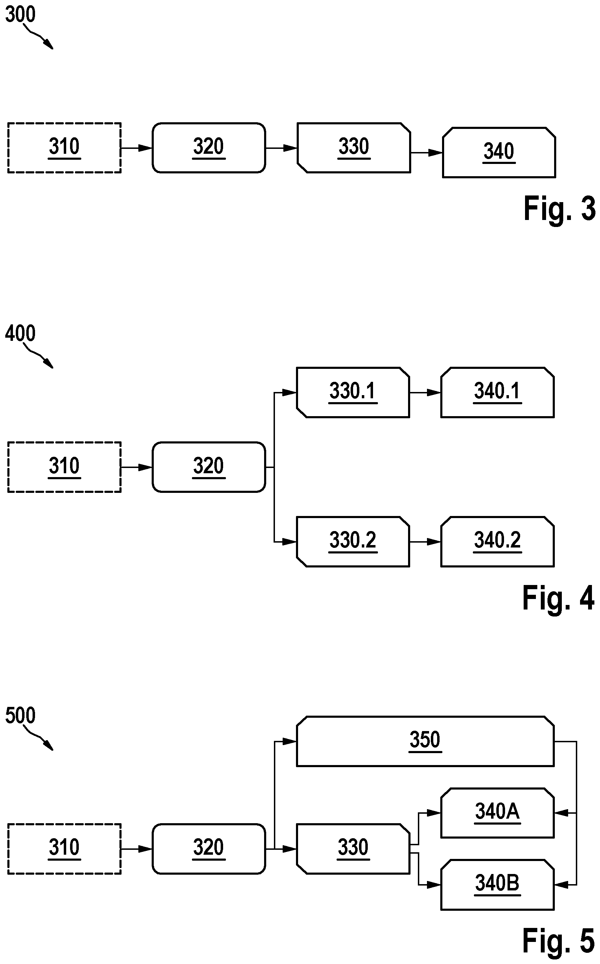

**Fig. 3** shows an example of a method for providing a task- and hardware-architecture-specific machine learning model.

In the optional step 310, a foundation model may be trained. If there are enough data and computational resources, this training step of the model may take place on large data. In most cases, it may be assumed that a (pre-)trained foundation model is available. An example of a pre-trained foundation model is described in the paper `EVA: Exploring the Limits of Masked Visual Representation Learning at Scale' by Fang et al., which can be retrieved from https://arxiv.org/abs/2211.07636.

In step 320, a trained superposition model may be obtained. For example, the superposition model may have been trained, during step 320 or before, as a student model in a knowledge transfer method. In a specific example, the trained foundation model from step 310 may be the teacher model in such a knowledge transform method. The employed knowledge transfer method may be knowledge distillation. The knowledge distillation may be a task-agnostic knowledge distillation. A neural architecture search may be used, with the student network having a search space from this neural architecture search, thereby constructing a KD/NAS method. In such KD/NAS, the student network may be the aforementioned superposition model. The superposition model may represent a superposition of many different neural networks. The superposition model may for example comprise different sequences of operations applied to data tensors.

Such operations may for example comprise convolutions, max poolings, activation functions etc. The superposition model may comprise alternative operations applied to the same tensor. For example, instead of only a single first operation, the superposition model may comprise several alternative first operations, such as a 3 × 3 convolution with 16 channels, a 5 × 5 convolution with 16 channels, and/or a 3 × 3 convolution with 32 channels. The different neural networks which may be extractable from the superposition model may provide different trade-offs between computational resource requirements and achievable accuracy. Alternatively, the training of the superposition model may have been done 'from scratch'. In particular, the superposition model may be trained from scratch if enough data and computational resources are available.

In step 330, the trained superposition model may be finetuned for an application task. For the finetuning 330 for the application task, a labelled dataset which may be specific for the application task may be used as an input for model 300. This labelled dataset may be comparatively smaller than the general dataset on which trained superposition model may have been trained in step 310 and/or the foundation model may have been trained in step 320. The finetuning of the trained superposition model for the application task using the labelled dataset specific for the application task may be performed in a task-specific and hardware-architecture-agnostic way. This may, for example, be done using the sandwich rule and/or in-place distillation techniques, as in the paper 'BigNAS: Scaling Up Neural Architecture Search with Big Single-Stage Models' by Yu et al., which can be retrieved from https://arxiv.org/abs/2003.11142.

In step 340, a machine learning model may be selected from the finetuned superposition model. The selecting may comprise performing a search. The search may be performed for a hardware architecture having received a characterization of the target hardware architecture as an input. The receiving of a characterization of the target hardware architecture may take place in an earlier step, e.g., one of steps 310-330. The search may use two functions, which may have been received as an input. The first function may be a function which describes the performance of a candidate machine learning model of the finetuned superposition model for the application task. This function may be determined specifically for the application task at hand. For example, the metrics used in the function may be specifically chosen to be able to quantify the performance for the application task at hand. The first function may for example comprise metrics such as a classification accuracy, a mean average precision, a perplexity, etc, or a combination of several of such metrics. The second function may be a function which describes the performance of a candidate machine learning model of the finetuned superposition mode when executed on the target hardware architecture. For that purpose, the second function may describe hardware metrics which may characterize the performance specifically on the target hardware architecture. For example, the second function may for example comprise metrics such as the latency of a hardware architecture measured on the target hardware, an energy consumption, etc., an approximation of these metrics, or a combination of several of such metrics. The search then may take place on the finetuned superposition model using the two functions, and return a model architecture which best satisfies a combination of such functions. In a specific example, the search may be configured to search for a Pareto-optimal trade-off between the first function and the second function. This may yield a Pareto-optimal model architecture for the application task and the target hardware architecture, which may be returned by the search.

Compared to the method 100 of Fig. 1, the step of providing of the trained superposition model in step 320 of method 300, which may be done by, e.g., hardware-architecture-independent KD/NAS, may enable the computationally expensive step of KD/NAS to be performed only once for various target hardware architectures and application tasks instead of the requirement of method 100 for an independent KD/NAS step per each target hardware architecture.

**Fig. 4** shows another example of a method 400 for providing a task- and hardware-architecture-specific machine learning model.

Method 400 may comprise, in addition to method 300, the finetuning of the trained superposition model step for multiple application tasks, which are identified by numerals '1' and '2', in steps 330.1 and 330.2, respectively. In steps 340.1 and 340.2, machine learning models may be selected from the finetuned superposition model. Each selection of a machine learning model may comprise performing a search. The searches may be performed for different target hardware architectures. The finetuning 330.1, 330.2 for application tasks 1 and 2 may be carried out simultaneously with respect to the application tasks 1 and 2, and/or the selecting steps 340.1, 340.2 of machine learning models for different target hardware architectures may be carried out simultaneously with respect to the target hardware architectures. The finetuning steps 330.1, 330.2 may also take place sequentially, e.g., in a consecutive manner, with respect to application tasks 1 and 2. Similarly, the selecting steps 340.1, 340.2 may also take place sequentially with respect to target hardware architectures.

**Fig. 5** shows another example of a method 500 for providing a task- and hardware-architecture-specific machine learning model.

Method 500 may comprise, in addition to method 300, the searches of the finetuned superposition model for multiple target hardware architectures, which are identified by characters 'A' and `B', in steps 340A and 340B, respectively. The searches 340A, 340B for target hardware architectures A and B may be carried out simultaneously with respect to the target hardware architectures A and B. The searches 340A, 340B may also take place sequentially, e.g., consecutively, with respect to target hardware architectures A and B.

Method 500 may further comprise, in addition to method 300 an additional step 350, which may comprise a past search. The past search in step 350 may be a task- and hardware-architecture-agnostic search, by which the result may be used for the searches for both target hardware architectures A and B. The past model architecture may make use of a first function and a second function. The first function may be a task-independent function, which may estimate the performance of a candidate machine learning model of the trained superposition model. The first function may be based on one or more universally applicable metrics relating to the performance of a model, such as a distillation loss used while training of the trained superposition model, and a number of parameters of the candidate machine learning model, e.g., as a proxy for representation capabilities of a model architecture. The second function may be a hardware-independent function, which may characterize the computational efficiency of a candidate model architecture. The second function may be based on one or more universally applicable metrics relating to the computational efficiency, such as a number of floating point operations (FLOPs), a number of multiply-accumulate operations (MACs), a number of parameters of the candidate machine learning model, e.g., as a proxy for memory traffic of a model architecture, and/or a latency on default hardware. During the past search, a task- and hardware-agnostic evolutionary architecture search may be performed on the trained superposition model using the first and second functions. In some embodiments, the past search may be configured to search for a Pareto-optimal trade-off between the first function and the second function, and may thereby return a resulting Pareto-optimal model architecture.

The searches for target hardware architectures A and B in steps 340A and 340B may be initialized based on the result of the past search. The searches may, for example, be executed as an evolutionary search, by using the result of the past model architecture as seed models for the task and hardware-specific evolutionary searches 340A, 340B. The searches in steps 340A and 340B may also, for example, be executed as a distribution optimization over model architectures; the model architectures may use an optimized distribution as a starting point, where the optimized distribution may result from a past search which may take place in step 350.

In some embodiments, the result of the past search in step 350 may comprise a set of Pareto-optimal model architectures with respect to the first and second functions, and may be used to initialize the task- and hardware-specific searches in steps 340A and 340B, where the set of Pareto-optimal model architectures may be used as an initial population.

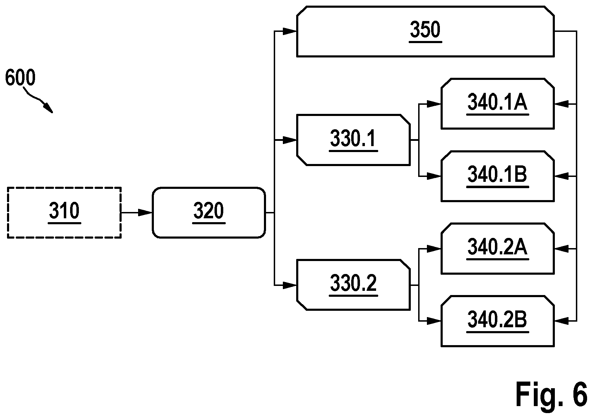

**Fig. 6** shows an example of a method 600 for providing a task- and hardware-architecture-specific machine learning model. The method 600 may combine features from models 400 and 500.

Method 600 may comprise, in addition to method 300, the finetuning of the trained superposition model, which is the output of step 320 for multiple application tasks, which are identified by numerals '1' and `2' here, in steps 330.1 and 330.2, respectively. In steps 340.1A, 340.1B, 340.2A and 340.2, searches may be carried out for multiple target hardware architectures, which are identified by the characters 'A' and `B'. The finetuning 330.1, 330.2 for application tasks 1 and 2 may be carried out simultaneously with respect to the application tasks 1 and 2, and/or the searches 340.1A, 340.1B, 340.2A and 340.2B for target hardware architectures may be carried out simultaneously with respect to the hardware architectures A and B. The searches 340.1A, 340.1B, 340.2A, 340.2B may also take place sequentially, e.g., in a consecutive manner, with respect to target hardware architectures A and B. Furthermore, the result of the past search in step 350 may initialize the searches in all of steps 340.1A, 340.1B, 340.2A and 340.2B.

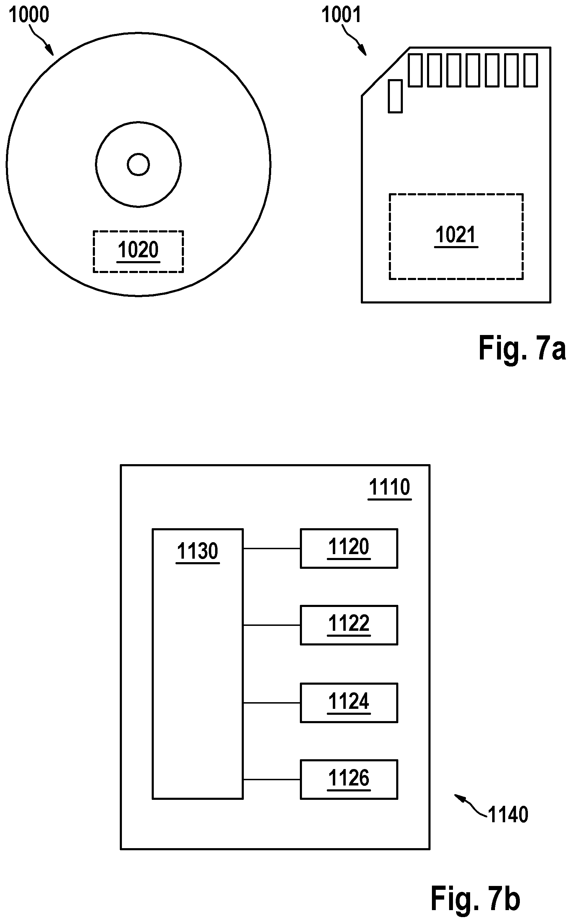

Any of the method(s) as described in this specification may be implemented on a computer as a computer implemented method, as dedicated hardware, or as a combination of both. As also illustrated in **Fig. 7a****,** instructions for the computer, e.g., executable code, may be stored on a computer-readable medium 1000, 1001, e.g., in the form of a series 1020, 1021 of machine-readable physical marks and/or as a series of elements having different electrical, e.g., magnetic, or optical properties or values. The computer-readable medium 1000, 1001 may be a transitory or non-transitory medium. Examples of computer-readable mediums include memory devices, optical storage devices, integrated circuits, etc. By way of example, Fig. 7a shows an optical storage device 1000 and a memory card 1001.

**Fig. 7b** shows a processor system 1140 which may comprise or represent a system configured to perform a method as described elsewhere in this specification. The processor system may comprise one or more subsystems or components 1110. For example, a processing subsystem 1120 may be provided for executing computer program components to perform a method as described elsewhere in this specification. A memory 1122 may be provided for storing programming code, data, etc. A communication subsystem 1126, such as a network interface, may allow communication with other entities. In some examples, a dedicated integrated circuit 1124 may be provided for performing part or all of the processing related to a method as described elsewhere in this specification. The processing subsystem 1120, the memory 1122, the dedicated IC 1124 and the communication subsystem 1126 may be connected to each other via an interconnect 1130, say a bus. While system 1140 is shown as including one of each described component, the various components may be duplicated in various embodiments. For example, the processing subsystem 1120 may include multiple microprocessors that are configured to independently execute a method as described in this specification or are configured to perform steps or subroutines of a method described herein such that the multiple processors cooperate to achieve the functionality described in this specification. Further, where the system 1140 may be implemented in a cloud computing system, a cloud server and/or a compute farm, the various hardware components may belong to separate physical systems. For example, the processing subsystem 1120 may include a first processor in a first server and a second processor in a second server.

In an alternative embodiment of Fig. 7b, the processor system 1140 may represent the target hardware architecture on which the selected machine learning model is deployed. In other words, the processor system may represent a deployment target, which may perform an application task as described elsewhere in this specification. The processor system 1140 may for example be a device or apparatus. The device or apparatus may comprise, for example, a sensor, which may determine measurements of the environment in the form of sensor signals, which may be given by, for example, digital images, e.g., video, radar, LiDAR, ultrasonic, motion thermal images, or audio signals. The device or apparatus may, for example, comprise a domestic appliance, which comprises a sensor which detects the presence of objects inside the washing machine, or a vehicle, which comprises a sensor which detects the presence of objects in the environment of the vehicle. An application task may comprise classifying the data from the sensor, detecting the presence of objects in the sensor data and/or performing a semantic segmentation on the data, e.g., regarding traffic signs, road surfaces, pedestrians and vehicles. Another application task may comprise determining a continuous value or multiple continuous values, e.g., perform a regression analysis, e.g., regarding a distance, a velocity, an acceleration, and/or the tracking of an item, e.g., an object, in the data. These examples of application tasks may be carried out on low-level features, such as edges or pixel attributes in the case of image data. Other application tasks may comprise detecting anomalies in technical systems, computing control signals for controlling technical systems, e.g., computer-controlled machines as robotic systems, vehicles, domestic appliances like a washing machine, power tools, manufacturing machines, personal assistants, or access control systems; or systems for conveying information, e.g., surveillance systems or medical systems as medical imaging systems.

Examples, embodiments or optional features, whether indicated as non-limiting or not, are not to be understood as limiting the invention as claimed.
It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A method (300, 400, 500, 600) for providing a task-specific and hardware-architecture-specific machine learning model, the method (300, 400, 500, 600) comprising:
- providing (320) a trained superposition model, wherein the trained superposition model comprises a superposition of a set of machine learning models, wherein individual machine learning models are extractable from the trained superposition model;
- receiving a characterization of a target hardware architecture;
- finetuning (330) the trained superposition model for an application task in a hardware-architecture-agnostic way, wherein the superposition model has been trained using a general dataset and wherein the finetuning (330) comprises using a labelled dataset which is specific for the application task;
- selecting a machine learning model from the finetuned superposition model, wherein the selecting of the machine learning model comprises performing, for the target hardware architecture, a search (340) using a first function describing a first performance of a candidate machine learning model for the application task and a second function describing a second performance of the candidate machine learning model when executed on the target hardware architecture;
- providing the selected machine learning model as output for deployment on the target hardware architecture.

2. A method (300, 400, 500, 600) according to claim 1, further comprising initializing the search (340) based on a result of a past search (350).

3. A method (300, 400, 500, 600) according to claim 2, wherein the individual machine learning models include machine learning models having different model architectures, and wherein the search (340) comprises using the result of the past search (350) to initialize an evolutionary search procedure and/or a distribution optimization over the different model architectures.

4. A method (300, 400, 500, 600) according to claims 2 or 3 , wherein the past search (350) comprises a task-agnostic and hardware-architecture-agnostic search, wherein the past search (350) is applied to the trained superposition model using a task-independent function which estimates a performance of a candidate machine learning model of the trained superposition model and a hardware-architecture-independent function which estimates a computational efficiency of the candidate machine learning model.

5. A method (300, 400, 500, 600) according to claim 4, wherein the task-independent function is based on values describing one or more of: a distillation loss used while training (310) the superposition model and a number of parameters of the candidate machine learning model, e.g., as a proxy for representation capabilities of the candidate machine learning model.

6. A method (300, 400, 500, 600) according to claims 4 or 5, wherein the hardware-architecture-independent function is based on values describing one or more of: a number of floating point operations (FLOPs), a number of multiply-accumulate (MAC) operations, a latency on a default hardware and a number of parameters of the candidate machine learning model, e.g., as a proxy for memory traffic of the candidate machine learning model.

7. A method (300, 400, 500, 600) according to any one of claims 1 to 6, further comprising using the selected machine learning model to initialize a subsequent search (340A, 340B) for a further machine learning model for another application task and/or another target hardware architecture.

8. A method (300, 400, 500, 600) according to any one of claims 1 to 7, wherein the set of machine learning models comprises neural networks.

9. A method (300, 400, 500, 600) according to any one of claims 1 to 8, further comprising training (310) a superposition model to provide (320) the trained superposition model by using the superposition model as a student model and using a foundation model as a teacher model, the training (310) comprising using a knowledge-transfer method to transfer knowledge from the teacher model to the student model.

10. A method (300, 400, 500, 600) according to claim 9, wherein the knowledge-transfer method comprises the usage of one or more of a knowledge distillation (KD), such as a task-agnostic knowledge distillation, and a neural architecture search (NAS).

11. A method (300, 400, 500, 600) according to any one of claims 1 to 10, further comprising finetuning (330.1, 330.2) the trained superposition model for a further application task to obtain a further finetuned superposition model and selecting a further machine learning model from the further finetuned superposition model.

12. A method (300, 400, 500, 600) according to any one of claims 1 to 11, further comprising providing a further task-specific and hardware-architecture-specific machine learning model for a further target hardware architecture by again selecting a machine learning model from the finetuned superposition model.

13. A method (300, 400, 500, 600) according to any one of claims 1 to 12, wherein the search (340) is configured to search for a Pareto-optimal trade-off between the first function and the second function.

14. A system (1140) comprising: one or more processors; and one or more storage devices storing instructions that, when executed by the one or more processors, cause the one or more processors to perform steps for a method (300, 400, 500, 600) according to any one of claims 1 to 13.

15. A transitory or non-transitory computer-readable medium (1000) comprising data (1020) representing instructions, which when executed by a processor system (1140), cause the processor system to perform one or more steps of the method (300, 400, 500, 600) according to any one of claims 1 to 13.
